# EUROPEAN PATENT APPLICATION

(11) **EP 2 208 603 A1**
(43) Date of publication of application: **21.07.2010**
(21) Application number: 09405011.9
(22) Date of filing: 19.01.2009
(51) Int. Cl.: B29C 47/10, B65D 65/42, C08J 7/04

(54) **Packaging pouch with food flow properties**

(71) Applicant: 3A Technology & Management AG, 8212 Neuhausen am Rheinfall (CH)
(72) Inventor: Bertolino, Noemi, 37138 Verona (IT); Della Torre, Andrea, 21052 Busto Arsizio (VA) (IT); Orsini, Lorenzo, 54037 Massa (IT)

(57) **Abstract**

In a packaging pouch made of a flexible mono or multilayer film for packaging viscous jelly and/or gravy matrix food, in which a thermo cycle such as retort, pasteurisation, hot filling or aseptic conditions are applicable, a layer of the film forming the pouch inner walls or a surface coating on the film comprises a substance based on a molecule and or molecules system functionalised by siloxane and/or fluorinated groups so that the surface tension of the layer or the surface coating on the layer is 24 mN/m or less and the pouch inner walls being in contact with food exhibit easy flow properties.

## Description

The invention relates to a packaging pouch made of a flexible mono or multilayer film for packaging viscous jelly and/or gravy matrix food, in which a thermo cycle such as retort, pasteurisation and hot filling or aseptic conditions are applicable.

Nowadays cooked and ready meals for human and pet consumption are really common. A conspicuous part of such food is sold in flexible flat/pillow or stand-up pouches. Pouches are produced and filled in line or as a two-step production. During the filling process several ingredients are inserted in solid and liquid states while the pouch is kept open. After filling, the pouch is sealed on the top and may pass through a thermal process for pasteurisation or sterilisation. However, part of the ingredients during filling can touch the inner walls of the pouch, and if this material does not flow down inside the pouch quickly, it will contaminate the sealing area and the pouch will not be sealed completely compromising food integrity.

A possible technological solution is to use ultrasonic sealing tool that is normally an expensive investment and not suitable for all material structures. With the same principle, when the consumer will empty the pouch, part of the meal will get in contact with pouch walls, and food which is not fast flowing out of the pouch will be quite inconvenient for the consumer that would need to use tools or shake/squeeze the pouch with the risk to spread food around. In case of pet food, consumers are even less keen in using a tool or touch the food by trying to empty the pouch. This explains why having a pouch exhibiting easy and fast flowing of the food along the inner walls can strongly reduce rejections during filling, decrease food safety risk and be an important consumer convenience feature in the field of ready meals and wet pet food in pouches. As an example, ready meal pouches may contain meat, vegetables, rice in gravy or sauce added during filling and juice produced by the food during retort cooking. Pet food pouches may contain meat based food in jelly or gravy and juice produced during retort. Ready sauce pouches may be vegetable, meat or fat (eggs, butter) based and sterilised or pasteurised.

EP-A-1 808 291 discloses a packaging material made of thermoplastic polymers suitable for packaging foods. To prevent pasty and fatty foods from adhering to packaging material, a nonstick composition comprising a fatty ester of a polyhydric alcohol having at least one fatty acid radical per ester molecule with 19 or more carbon atoms is incorporated into at least one selected area of a polymer packaging material. A permanent nonstick effect is observed even if the fatty acid ester is included only in surface-close regions or layers of the packaging material. The outer layer in which the fatty acid ester additive is contained can be a sealing layer. The packaging preferably has the form of a pouch.

WO 2004/050357 A1 discloses a laminate useful in the manufacture of packages for containers, in particular ovenable resistant food containers. The laminate includes a substrate, preferably of a paperboard, and a food contact release layer comprising a blend of polymethylpentene and polypropylene bonded to one side of the substrate. The food contact release layer has a lower surface tension than the food product to come into contact with the release layer and thus offers a good release from food products, particularly those containing high levels of starch and sugar.

WO 2005/092609 A1 discloses a coextruded biaxially oriented PET film with food release properties having a sealable skin layer comprising a hot melt adhesive resin. The skin layer may further comprise fatty aides, waxes or silicon oils and particulate substances such as silica, clay and calcium carbonate.

EP 1 174 457 A1 discloses a biaxially oriented polyester film with release properties in aqueous environment. The film, which is used in metal cans as inner release coating, comprises a polyester in which ethylene terephthalate units and/or ethylene naphthalate units are the main structural components, and a wax compound and /or silicon compound.

US 6 528 134 B1 discloses a coextruded film with release and dead fold properties for packaging cheese. The film comprises three layers of polyethylene or polypropylene and glycerol monostearate as cheese release agent.

From the aforementioned prior art documents, packaging films having antistick or release properties are known. However, packaging materials having easy food flow properties have not been addressed so far in the prior art literature. Moreover, none of the aforementioned prior art documents refer to retort, pasteurisation or hot filling applications or aseptic conditions.

Easy flowing according to the present invention is different from antistick or release known in the prior art. Antistick or release means something blocked on the packaging that when removed will immediately fall down or out of the packaging. Easy flowing means continuous flow of a product with a velocity depending on the product, but as well on the property of the surface of the layer of the film or the coating forming the pouch inner walls being in contact with food.

The object of the present invention is to provide a packaging pouch made of a flexible mono or multilayer film for packaging viscous jelly and/or gravy matrix food, in which a thermo cycle such as retort, pasteurisation, hot filling or aseptic conditions are applicable, and which exhibits easy food flow properties of the pouch inner walls being in contact with food. The surface layer of pouch inner walls being in contact with food are typically polypropylene or polyethylene based sealing layers.

The aforementioned objective is achieved by way of the invention in that the surface of a layer of the film forming the pouch inner walls or a surface coating on the film being in contact with food comprises a substance based on a molecule and or molecules system, defined as mixture of different molecular weight and/or molecular structure, functionalised by siloxane and/or fluorinated groups so that the surface tension of the layer or the surface coating on the layer is 24 mN/m or less and the pouch inner walls being in contact with food exhibit easy flow properties.

Preferably the surface tension of the layer or the surface coating is 21 mN/m or less.

The pouch can withstand thermo cycles up to 135°C for 90 min. This solution provides easy flow property also in case of aseptic filling application.

To measure easy flow properties, there does not exist a scientific method such as for measuring the surface tension. Therefore, a methodology and a tool to evaluate easy flowing has been developed by the inventors. However, it has been found that easy flow properties are correlated to surface tension.

At least part of the layer of the film forming the pouch inner walls or the surface coating on the film preferably contains 0,01 to 3 wt.%, more preferably 0,1 to 0,6 wt.% of the molecule and or molecules system functionalised by siloxane and/or fluorinated groups.

Preferably the surface of the layer of the film forming the pouch inner walls is polypropylene or polyethylene based.

The molecule and or molecules system functionalised by siloxane and/or fluorinated groups can be part of an organic or inorganic additive or filler material contained in at least part of the layer of the film forming the pouch inner walls or the surface coating on the film providing easy food flow properties.

The layer of the film forming the pouch inner walls can be additivated with addive or filler during production through blown or cast extrusion such as non-oriented, mono- or biaxial oriented film.

The surface coating on the film can be applied by solvent based rotogravure or atmospheric plasma treatment.

The packaging pouch according to the present invention can be of any shape or design, e.g. a flat pouch or a stand-up pouch, a pouch in the form of a doypack, a pillow, or a cheerpack.

With the packaging pouch according to the present invention easy flow properties are active during filling, i.e. food processing, as well as during food emptying by the consumer when the food is consumed.

The following laminates are examples of packaging materials suitable in the production of packaging pouches according to the present invention:
Polyester/adhesive/polyamide/adhesive/polypropylene
Polyester/adhesive/polyamide/adhesive/polyethylene
Polyester/adhesive/polyester/adhesive/polypropylene
Polyester/adhesive/polyester/adhesive/polyethylene
Polyester/adhesive/aluminium/adhesive/polypropylene
Polyester/adhesive/aluminium/adhesive/polyethylene
Polyester/adhesive/polyethylene
Polyester/adhesive/polypropylene
Polyester/adhesive/polyester/adhesive/polyamide/adhesive/polyethylene
Polyester/adhesive/polyester/adhesive/polyamide/adhesive/polypropylene
Polyester/adhesive/aluminium/adhesive/ polyamide/adhesive/polypropylene

To provide barrier properties, polyester and/or polyamide of the above structures without aluminium can be as well coated with a ceramic material, such as SiOₓ or AIOₓ , or coated with an organic barrier material. Polyethylene and polypropylene films can be as well coextruded with EVOH and mono- or bi-oriented. Polyester films, such as PET films, can be metallised.

The polyethylene or polypropylene layer is a sealing layer forming the pouch inner walls.

## Claims

1. Packaging pouch made of a flexible mono or multilayer film for packaging viscous jelly and/or gravy matrix food, in which a thermo cycle such as retort, pasteurisation, hot filling or aseptic conditions are applicable,
**characterised in that**
the surface of a layer of the film forming the pouch inner walls or a surface coating on the film being in contact with food comprises a substance based on a molecule and or molecules system, defined as mixture of different molecular weight and/or molecular structure, functionalised by siloxane and/or fluorinated groups so that the surface tension of the layer or the surface coating on the layer is 24 mN/m or less and the pouch inner walls being in contact with food exhibit easy flow properties.

2. Packaging pouch according to claim 1, wherein the surface tension of the layer or the surface coating is 21 mN/m or less.

3. Packaging pouch according to claim 1 or 2, wherein at least part of the layer of the film forming the pouch inner walls or the surface coating on the film contains 0,01 to 3 wt.%, preferably 0,1 to 0,6 wt.% of the molecule and or molecules system functionalised by siloxane and/or fluorinated groups.

4. Packaging pouch according to any of claims 1 to 3, wherein the surface of the layer of the film forming the pouch inner walls is polypropylene or polyethylene based.

5. Packaging pouch according to any of claims 1 to 4, wherein the molecule and or molecules system functionalised by siloxane and/or fluorinated groups is part of an organic or inorganic additive or filler material contained in at least part of the layer of the film forming the pouch inner walls or the surface coating on the film providing easy food flow properties.

6. Packaging pouch according to any of claims 1 to 5, wherein the layer of the film forming the pouch inner walls is additivated with addive or filler during production through blown or cast extrusion such as non-oriented, mono- or biaxial oriented film.

7. Packaging pouch according to any of claims 1 to 5, wherein the surface coating on the film is applied by solvent based rotogravure or atmospheric plasma treatment.

8. Packaging pouch according to any of the preceding claims in the form of a doypack, a stand-up pouch, a pillow, a flat pouch or a cheerpack.
